# EUROPÄISCHE PATENTSCHRIFT

(11) **EP 2 117 758 B1**
(45) Veröffentlichungstag und Bekanntmachung des Hinweises auf die Patenterteilung: **28.10.2015**
(21) Anmeldenummer: 07704543.3
(22) Anmeldetag: 13.02.2007
(51) Int. Cl.: B23K 1/20, B23K 9/04, B23K 26/34

(54) **SCHWEISSREPARATUR VON INNEN LIEGENDEN DEFEKTEN**
WELDED REPAIR OF DEFECTS LOCATED ON THE INSIDE
RÉPARATION PAR SOUDAGE DE DÉFAUTS INTÉRIEURS

(43) Veröffentlichungstag der Anmeldung: 18.11.2009
(73) Patentinhaber: Siemens Aktiengesellschaft, 80333 München (DE)
(72) Erfinder: GRÜGER, Birgit, 44329 Dortmund (DE); IORDACHE, Lucian, Stoney Creek L8G 2X9 (CA); TIMOTIN, Ovidiu, Hamilton, Ontario L9C 4S5 (CA)
(86) Internationale Anmeldenummer: PCT/EP2007/051368
(87) Internationale Veröffentlichungsnummer: WO 2008/098614

(56) Entgegenhaltungen:
- EP-A- 1 584 402
- CH-A- 600 980
- DATABASE EPODOC EUROPEAN PATENT OFFICE, THE HAGUE, NL; 9. Oktober 1992 (1992-10-09), NIPPON STEEL WELD PROD & ENG: "METHOD FOR REDUCING HYDROGEN AND NITROGEN OF SUBMERGED ARC WELD METAL" XP002454489 & JP 04 284975 A (NIPPON STEEL WELDING PROD ENG) 9. Oktober 1992 (1992-10-09)
- DATABASE EPODOC EUROPEAN PATENT OFFICE, THE HAGUE, NL; 5. November 2003 (2003-11-05), HITACHI LTD: "method for repairing cracking defect" XP002454490 & JP 2003 311463 A (HITACHI LTD) 5. November 2003 (2003-11-05)

## Beschreibung

Die Erfindung betrifft ein Verfahren zur Schweißreparatur von innen liegenden Rissen in Bauteilen.

Bauteile werden nach der Herstellung oder nach dem Einsatz auf verschiedene Art und Weise geprüft, wobei dann gegebenenfalls innen liegende Defekte festgestellt werden, die oft repariert werden müssen.

Nach dem Stand der Technik wird Material um den Riss herausgearbeitet, sowohl wenn der Riss an der Oberfläche in Erscheinung tritt als auch wenn er innen liegend ist, d.h. keine Verbindung zur äußeren Oberfläche hat. Solche herausgearbeiteten Risse werden dann zugelötet oder zugeschweißt. Dieses Ausarbeiten ist zeitaufwändig, da es einen weiteren Bearbeitungsschritt darstellt. Insbesondere muss darauf geachtet werden, dass der ganze Riss herausgearbeitet wird.

JP 0 428 4975 offenbart ein Verfahren zur Schweißreparatur eines Risses in einem Bauteil.

Es ist daher Aufgabe der Erfindung ein Verfahren gemäß Anspruch 1 aufzuzeigen, das die Schweißreparatur von innen liegenden Defekten vereinfacht.

Die Aufgabe wird gelöst durch ein Verfahren zur Schweißreparatur von innen liegenden Defekten gemäß Anspruch 1.

Dabei wird ein Flussmittel verwendet, das auf der Oberfläche des Bauteils in der Nähe des Risses aufgebraucht wird und dann geschweißt wird.

In den Unteransprüchen sind weitere vorteilhafte Maßnahmen aufgelistet, die beliebig miteinander kombiniert werden können, um weitere Vorteile zu erzielen.

Es zeigen:
- Figur 1, 2, 3: den Ablauf des Verfahrens,
- Figur 4: eine Gasturbine,
- Figur 5: perspektivisch eine Turbinenschaufel,
- Figur 6: perspektivisch eine Brennkammer und
- Figur 7: eine Liste von Superlegierungen.

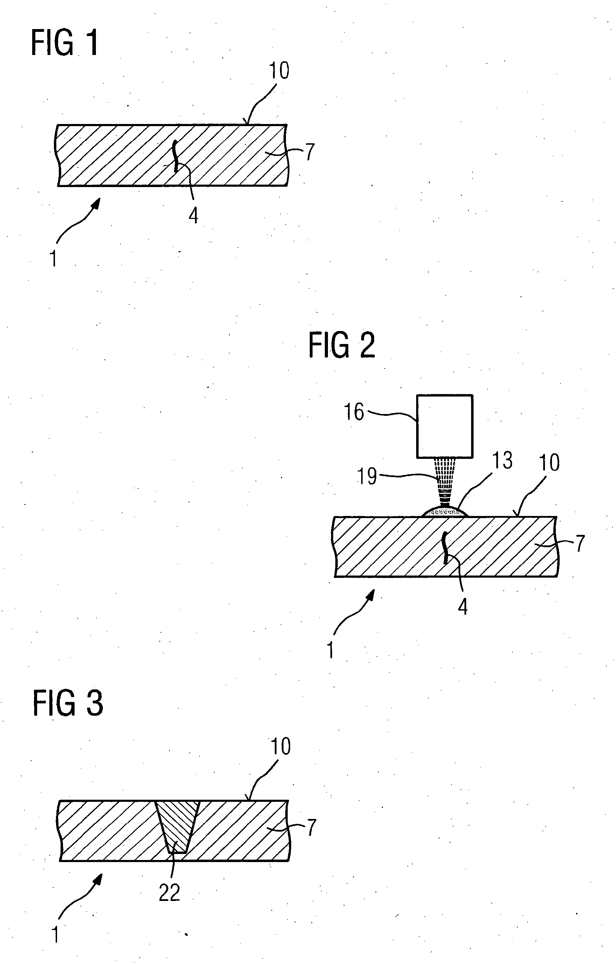

Figur 1 zeigt ein Bauteil 1, 120, 130, 155, das im Substrat 7 einen Riss 4 aufweist, der nicht bis zur äußeren Oberfläche 10 sich erstreckt, also vollkommen im Substrat 7 des Bauteils 1, 120, 130, 155 eingeschlossen ist.

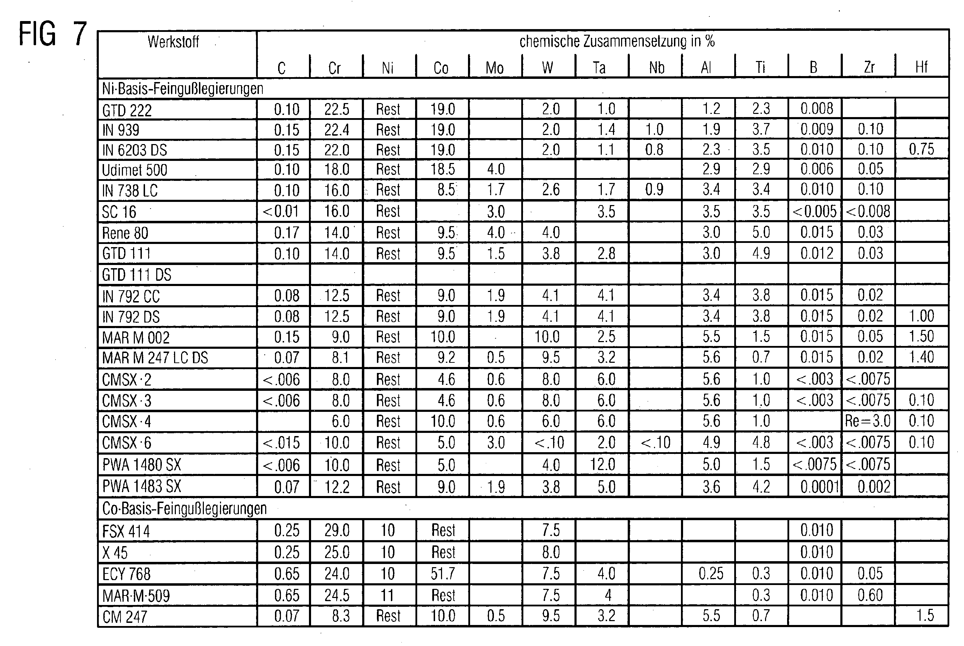

Das Material des Substrats 7, insbesondere bei Turbinenbauteilen, ist vorzugsweise eine nickel- oder kobaltbasierte Legierung. Beispiele für verwendete nickel- oder kobaltbasierte Legierungen finden sich in der Figur 7.

Ebenso lässt sich das Verfahren anwenden auf Stähle (auf rostfreie Edelstähle, z. B. SS410) sowie an Teilen eines Verdichters oder an Führungsnuten.

In Figur 2 ist schematisch eine Anordnung gezeigt, um den Riss 4 gemäß Figur 1 zu, reparieren.

Innen liegende Risse 4 werden detektiert, vorzugsweise mittels eines Wirbelstromverfahrens 5.

Dann wird ein so genanntes "Aktiv"-Flussmittel 13, die aus dem Stand der Technik bekannt sind, auf die Oberfläche 10 im Bereich oberhalb des Risses 4 aufgebracht. Das Flussmittel 13 liegt vorzugsweise in Pulverform vor. Vorzugsweise besteht das Flussmittel 13 aus Pulver.

Das Flussmittel 13 kann vorzugsweise auch als Suspension, oder als Schlicker auf Alkohol- oder Wasserbasis, mit oder ohne Binder, aufgetragen aufgepinselt, aufgesprüht werden. Ebenso vorzugsweise kann das Pulver gepresst, also als Streifen oder als Blech vorliegen.

Für den Zusatzwerkstoff wird vorzugsweise feinkörniges Pulver (+1µm/-45µm) verwendet.

Zum Schweißen werden vorzugsweise Schmelzschweißverfahren und/oder Plasmaschweißverfahren verwendet:
- Lichtbogenhandschweißen
- Metall-Lichtbogenschweißen mit Fülldrahtelektrode ohne Schutzgas;
- Unterpulverschweißen mit Drahtelektrode,
- Unterpulverschweißen mit Fülldrahtelektrode,
- Metall-Inertgasschweißen (MIG-Schweißen),
- Metall-Aktivgasschweißen (MAG-Schweißen),
- Metall-Aktivgasschweißen (MAG-Schweißen),
- Wolfram-Inertgasschweißen (WIG-Schweißen),
- Gasschweißen mit Sauerstoff-Acetylen-Flamme.

Bevorzugt wird das WIG-Schweißen benutzt.

Ebenso können andere Verfahren wie Laserschweißen, Elektronenstrahlschweißen verwendet werden.

Mittels eines Schweißgeräts 16 (WIG-Schweißgerät, Laserschweißgerät, etc.), das ein Plasma 19 erzeugt oder Laserstrahlen 19 aussendet, wird das Flussmittel 13 aufgeschmolzen und der Bereich um den Riss 4 wird vollständig erfasst, so dass sich eine Aufschmelzzone 22 um den Riss 4 gemäß Figur 3 bildet, die bis zu 8mm (= Schmelzbadtiefe) tief sein kann. Der Fachmann kann Laserparameter (Dauer, Intensität, Leistung,..) Materialspezifisch und Bauteilspezifisch einstellen, um einen Riss 4 vollständig in einer Aufschmelzzone 22 zu erfassen.

In Figur 3 erstreckt sich die Aufschmelzzone nicht durch die gesamte Dicke des Bauteils 7. Ebenso kann sich insbesondere bei hohlen oder dünnwandigen Bauteilen die Aufschmelzzone 22 vorzugsweise über die gesamte Dicke erstrecken.

Eine weitere Schweißung ist nicht notwendig.

Vorzugsweise wird die bearbeitete Stelle noch überarbeitet.

Für das Flussmittel 13 kann ein Flussmittel aus dem Stand der Technik ausgewählt werden.

Das Flussmittel 13 stellt vorzugsweise ein Pulver dar. Ebenso vorzugsweise kann das Flussmittel 13 eine Pulvermischung darstellen.

Eine Zusammensetzung aus SiO₂ oder Fe₂O₃ kann vorzugsweise verwendet werden.

Ebenso vorzugsweise ist eine Zusammensetzung aus Titanoxid (0 - 60wt%), Nickeloxid (0 - 40wt%) sowie Mangansilizid (0-10wt%) zu verwenden.

Die Kombinationen:
Titanoxid
Nickeloxid
Mangansilizid
Titanoxid/Nickeloxid
Titanoxid/Mangansilizid
Nickeloxid/Mangansilizid
Titanoxid/Nickeloxid/Mangansilizid
sind jeweils bevorzugte Ausführungsbeispiele.

Die deutlich verbesserte Schmelzbadtiefe beim Laserschweißen und Umschmelzen von Rissen mit solchen "Aktiv"-Flussmitteln 13 bzw. so genannten oberflächenaktiven Suspensionen wird durch folgende Faktoren beeinflusst:
a: Marangoni-Effekt: die Energie- und Wärmeübertragung beim Schweißen/Umschmelzen erfolgt durch Bewegung von flüssigem Metall im Schmelzbad. Werden die Bewegungen auf der Schmelzbadoberfläche nach Auswärts hingerichtet, wird das Schmelzbad breit und seicht. In einer Bewegung, die Inwärts gerichtet ist, wird das Schmelzbad schmal und tief. Die Art der Bewegung im Schmelzbad wird durch die Oberflächenspannung des flüssigen Metalls beeinflusst. Durch die gezielte Zugabe von oberflächenaktiven Substanzen (Zusatzwerkstoff) ist es möglich, die Oberflächenspannung im Schmelzbad so zu ändern, dass die Bewegung des flüssigen Metalls Inwärts gerichtet ist und damit eine deutlich verbesserte Schmelzbadtiefe erreicht wird.
b: Verbesserte Absorption des Schweißstrahls: die oberflächenaktive Substanz wird im Laufe des Schweißprozesses umgeschmolzen und bildet eine sehr dünne Schicht (Schlacke) auf der Schmelzbadoberfläche. Diese dünne Schicht beeinflusst nicht nur die Oberflächenspannung des Schmelzbades, sondern gleichzeitig weist sie deutlich verbesserte Absorptionseigenschaften des Schweißstrahls auf als das flüssige Metall des Grundwerkstoffs. Damit ist es möglich, eine verbesserte Energieübertragung und Schmelzbadtiefe zu erzeugen, die unter bestimmten Umständen bis zu 4-8mm erreichen kann.

Die verbesserte Energieübertragung beim WIG-Schweißen/Umschmelzen mit oberflächenaktiven Substanzen wird durch eine Anreicherung des Lichtbogens mit Elektronen erreicht. Durch diese Anreicherung wird der Lichtbogen verengt und damit eine deutlich höhere Energiedichte und verbesserte Schmelzbadtiefe erzeugt.

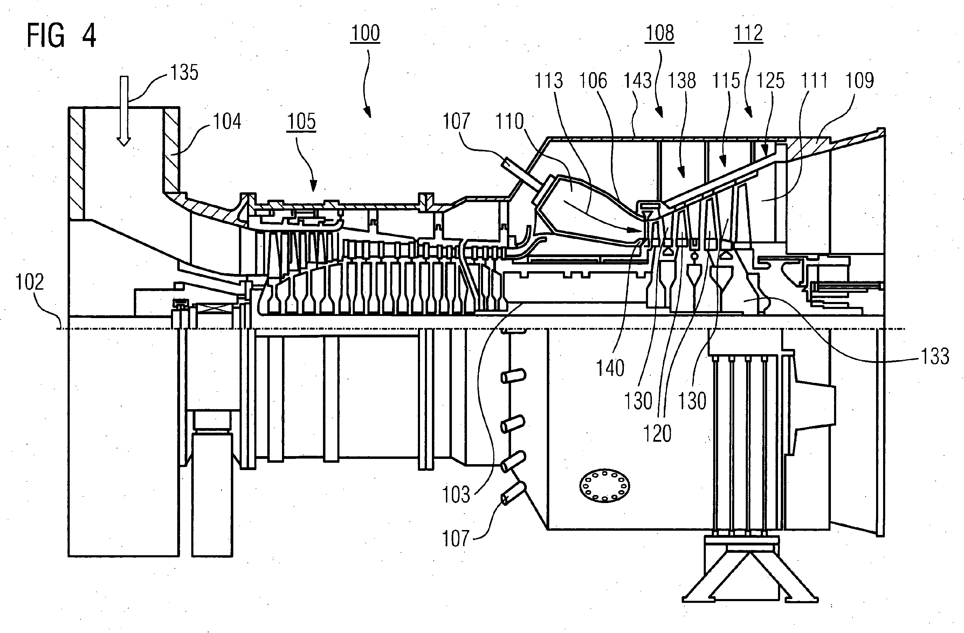

Die Figur 4 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

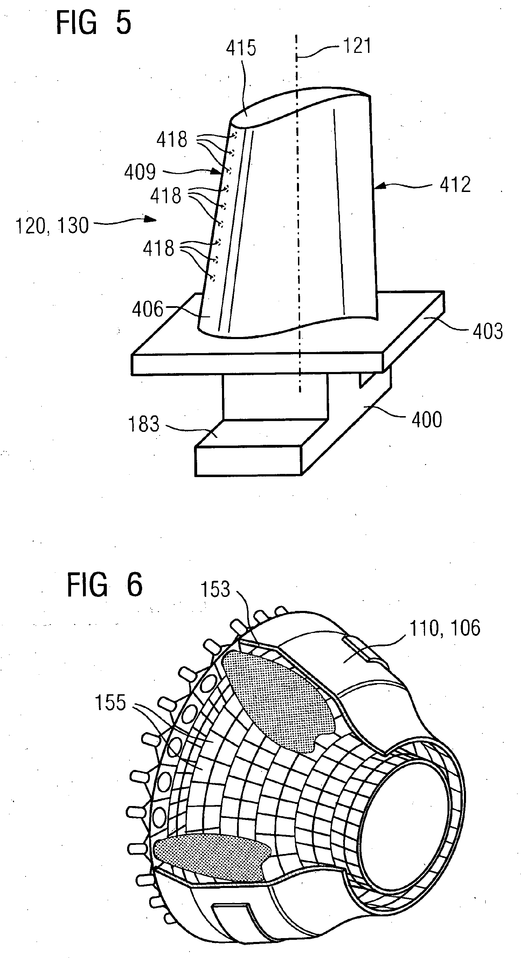

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Wertstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Schweißreparatur eines unter einer Oberfläche (10) eines Bauteils (1, 120, 130, 155) innen liegenden Risses (4),
bei dem ein Flussmittel (13) als Pulvermischung auf die Oberfläche (10) oberhalb des Risses (4) des Bauteils (1, 120, 130, 155) aufgebracht wird und
dann das Flussmittel (13) im Bereich um den innen liegenden Riss (4) mittels eines Schweißgeräts (16) aufgeschmolzen wird.

2. Verfahren nach Anspruch 1,
bei dem der Riss (4) vollständig durch eine Aufschmelzzone (22) beim Schweißen erfasst wird.

3. Verfahren nach Anspruch 1 oder 2,
bei dem ein Schmelzschweißverfahren verwendet wird.

4. Verfahren nach Anspruch 2 oder 3,
bei dem ein Plasmaschweißverfahren verwendet wird.

5. Verfahren nach Anspruch 2 oder 3,
bei dem ein Laserstrahlschweißen verwendet wird.

6. Verfahren nach Anspruch 2 oder 3,
bei dem ein Elektronenschweißverfahren verwendet wird.

7. Verfahren nach Anspruch 1,
bei dem das Pulver in Schlickerform vorliegt.

8. Verfahren nach Anspruch 1,
bei dem das Pulver in einer Suspension vorliegt.

9. Verfahren nach Anspruch 1, 7 oder 8,
bei dem das Pulver ein Binder enthält.

10. Verfahren nach Anspruch 1, 7 oder 8,
bei dem das Pulver keinen Binder enthält.

11. Verfahren nach Anspruch 1, 7, 8, 9 oder 10,
bei dem das Flussmittel (13) in gepresster Form, vorzugsweise als Blech verwendet wird.

12. Verfahren nach Anspruch 1, 7, 8, 9, 10 oder 11, bei dem das Pulver Titanoxid (TiO₂) aufweist, insbesondere aus Titanoxid besteht.

13. Verfahren nach Anspruch 1, 7, 8, 9, 10, 11 oder 12, bei dem das Pulver Nickeloxid aufweist,
insbesondere aus Nickeloxid besteht.

14. Verfahren nach Anspruch 1, 7, 8, 9, 10, 11, 12 oder 13, bei dem das Pulver Mangansilizid aufweist, insbesondere aus Mangansilizid besteht.

## Claims

1. Method for the welded repair of a crack (4) lying on the inside under a surface (10) of a component (1, 120, 130, 155), in which method a flux (13) is applied as a powder mixture to the surface (10) above the crack (4) of the component (1, 120, 130, 155) and then the flux (13) is melted in the region around the crack (4) lying on the inside by means of a welding device (16).

2. Method according to Claim 1,
in which the crack (4) is completely encompassed by a melting zone (22) during the welding.

3. Method according to Claim 1 or 2,
in which a fusion welding method is used.

4. Method according to Claim 2 or 3,
in which a plasma welding method is used.

5. Method according to Claim 2 or 3,
in which a laser-beam welding method is used.

6. Method according to Claim 2 or 3,
in which an electron-beam welding method is used.

7. Method according to Claim 1,
in which the powder is in the form of a slurry.

8. Method according to Claim 1,
in which the powder is in a suspension.

9. Method according to Claim 1, 7 or 8,
in which the powder contains a binder.

10. Method according to Claim 1, 7 or 8,
in which the powder does not contain a binder.

11. Method according to Claim 1, 7, 8, 9 or 10,
in which the flux (13) is used in a pressed form, preferably as a sheet.

12. Method according to Claim 1, 7, 8, 9, 10 or 11,
in which the powder comprises titanium oxide (TiO₂), in particular consists of titanium oxide.

13. Method according to Claim 1, 7, 8, 9, 10, 11 or 12,
in which the powder comprises nickel oxide, in particular consists of nickel oxide.

14. Method according to Claim 1, 7, 8, 9, 10, 11, 12 or 13, in which the powder comprises manganese silicide, in particular consists of manganese silicide.

## Revendications

1. Procédé de réparation par soudure d'une fissure (4) se trouvant à l'intérieur sous une surface (10) d'une pièce (1, 120, 130, 155),
dans lequel on dépose un flux (13) sous la forme d'un mélange de poudre sur la surface (10) au-dessus de la fissure (4) de la pièce (1, 120, 130, 155) et
ensuite, on fait fondre le flux (13) dans la région autour de la fissure (4) se trouvant à l'intérieur au moyen d'un appareil (16) de soudure.

2. Procédé suivant la revendication 1,
dans lequel on prend à la soudure la fissure complètement par une zone (22) de fusion.

3. Procédé suivant la revendication 1 ou 2,
dans lequel on utilise un procédé de soudure par fusion.

4. Procédé suivant la revendication 2 ou 3,
dans lequel on utilise un procédé de soudure au plasma.

5. Procédé suivant la revendication 2 ou 3,
dans lequel on utilise un procédé de soudure au faisceau laser.

6. Procédé suivant la revendication 2 ou 3,
dans lequel on utilise un procédé de soudure par électron.

7. Procédé suivant la revendication 1,
dans lequel la poudre est sous la forme d'une barbotine.

8. Procédé suivant la revendication 3,
dans lequel la poudre est sous la forme d'une suspension.

9. Procédé suivant la revendication 1, 7 ou 8,
dans lequel la poudre contient un liant.

10. Procédé suivant la revendication 1, 7 ou 8,
dans lequel la poudre ne contient pas de liant.

11. Procédé suivant la revendication 1, 7, 8, 9 ou 10,
dans lequel on utilise le flux (13) sous forme comprimée, de préférence sous la forme d'une tôle.

12. Procédé suivant la revendication 1, 7, 8, 9, 10 ou 11, dans lequel la poudre comporte de l'oxyde de titane (TiO₂) en en étant notamment constituée.

13. Procédé suivant la revendication 1, 7, 8, 9, 10, 11 ou 12, dans lequel la poudre comporte de l'oxyde du nickel,
en en étant notamment constituée.

14. Procédé suivant la revendication 1, 7, 8, 9, 10, 11, 12 ou 13,
dans lequel la poudre comporte du silicium de manganèse,
en en étant notamment constituée.
